# EUROPEAN PATENT SPECIFICATION

(11) **EP 4 393 825 B1**
(45) Date of publication and mention of the grant of the patent: **28.10.2026**
(21) Application number: 22383300.5
(22) Date of filing: 28.12.2022
(51) Int. Cl.: B64D 37/34, B64D 37/30, F02C 7/224, B64D 41/00

(54) **FUEL CONDITIONING SYSTEM**
BRENNSTOFFKONDITIONIERUNGSSYSTEM
SYSTÈME DE CONDITIONNEMENT DE CARBURANT

(43) Date of publication of application: 03.07.2024
(73) Proprietor: Airbus Operations, S.L.U., 28906 Getafe (Madrid) (ES)
(72) Inventor: CASADO MONTERO, Carlos, E-28906 Getafe, Madrid (ES); CALDERÓN GÓMEZ, Pablo Manuel, E-28906 Getafe, Madrid (ES); ZAMARRO MARTÍN, María Cruz, E-28906 Getafe, Madrid (ES); GÓMEZ FERNÁNDEZ, Agustín, E-28906 Getafe, Madrid (ES); CASTAÑO DE LA MOTA, David, E-28906 Getafe, Madrid (ES)
(74) Representative: ABG Intellectual Property Law, S.L.

(56) References cited:
- JP-A- 2013 019 378
- US-A1- 2015 321 767
- US-A1- 2015 337 730
- US-A1- 2021 301 720
- US-A1- 2022 099 299

## Description

### TECHNICAL FIELD OF THE INVENTION

The present invention relates to a conditioning system for an aircraft. In particular, the present invention belongs to a conditioning system having a new architecture including a power unit and a heat recovery circuit. The present invention also relates to an aircraft comprising said conditioning system and to a method for conditioning fuel by means of the conditioning system of the invention.

### BACKGROUND OF THE INVENTION

Auxiliary power units, or APUs, are well known in the aeronautical technical field for being engines capable of supplying energy to functions of an aircraft that are not considered as propulsion functions. APUs are generally found in large aircrafts and located at/or near to the tail cone part of these aircrafts.

Typical APUs generally comprise a power section being the power-producing section of the APU, a load compressor section providing pneumatic power for the aircraft and a gearbox section responsible for transferring power from the main shaft of the engine to a generator for electrical power. APUs are also known for allowing an aircraft to be autonomous of the external electrical and pneumatic power sources on the ground and in-flight.

Additionally, Auxiliary Power Units in an aircraft can be used for replacing the primary engines when they are not running when said aircraft is on-ground. APUs also sustain temporal power to start the primary engines during normal operations, they can be used to replace the power generated by primary engines when failed for dispatch conditions or continuously implemented for supplying emergency power until the aircraft lands.

The prior art discloses engine implementing hydrogen combustion applied in the automotive field.

Also, in the field of gas turbine for aircraft, well known technologies provide exhausting gas heat recovery. However, these techniques and technologies used nowadays are applicable to fossil fuel engines.

Known issues of hydrogen engine are based on conditioning the hydrogen fuel up to ambient temperature and correct pressure in order to feed the engine of the APU in proper conditions and, also, ensuring a secured combustion avoiding damages in the different components and conducts of said Auxiliary Power Unit. Due to its storing conditions, around 20K in the aeronautic field of technique, hydrogen is a fuel which requires particular sizing and particular operational conditions of the system consuming this type of fuel.

Also, additional known problems of using hydrogen for an engine in an aircraft is due to phase transitions since, when stored in the aircraft before feeding the engine, the hydrogen is in liquid phase. However, in order for the engine of an APU to work in optimal manners, the liquid hydrogen has to be brought through a phase transition from liquid to gas. These phase changes also requires that the system is designed and sized in such a way that hydrogen stays stable while its conditions (Temperature, Pressure, Phase etc.) is changing throughout the whole Auxiliary Power System.

Therefore, there is a need in the art for a conditioning system allowing the recycling of heat produced by an hydrogen engine, more particularly from exhaust gases, when implemented in an aircraft and sizing said system to the particular case of aircrafts and a conditioning system capable of maintaining the hydrogen in its optimal condition in any flight or ground operation of an aircraft.

Document US2015337730A1 discloses aircraft systems using dual fuels in an aviation gas turbine engine and a method of operating same.

### SUMMARY OF THE INVENTION

The present invention provides conditioning system according to claim 1, an aircraft according to claim 14 and a method for conditioning fuel of a conditioning system according to claim 15. Dependent claims disclose particular embodiments of the present invention.

*In a first inventive aspect, the invention provides a conditioning system for an aircraft comprising a power unit, wherein the power unit comprises:*
- *a fuel inlet configured to supply liquid fuel to a fuel conduct,*
- *an engine comprising an inlet connected to the fuel conduct and an outlet connected to a power unit outlet, the power unit outlet being configured to exhaust gases out of the engine,*
- *evaporating means comprising a fuel inlet and* a *fuel outlet wherein the evaporating means are configured to supply heat to the fuel of the fuel conduct and turn the fuel of the fuel conduct from liquid form or supercritical fluid form (SCF) into low temperature gas form at the fuel outlet,*
- *heating means comprising a fuel inlet and* a *fuel outlet, the heating means being connected to the evaporating means and wherein the heating means are configured to supply heat to the fuel of the fuel conduct,*
*wherein the conditioning system comprises a heat recovery circuit comprising a heat exchanger, in fluid communication with the evaporating means, and* a *working fluid,*
*the heat exchanger is connected to the power unit outlet, comprises an inlet and an outlet , and is configured to transfer heat from the exhaust gases of the power unit outlet to the working fluid,*
*the heat recovery circuit being configured to supply heat from the heat exchanger to the evaporating means* via/through the working fluid, *and*
*the evaporating means are configured to supply heat from the working fluid of the heat recovery circuit to the fuel of the fuel conduct.*

The conditioning system of the present invention comprises a power unit. In some embodiments, the power unit is an Auxiliary Power Unit, also called APU, or any propulsion system configured for delivering power to an aircraft. In the particular embodiment of the power unit being an APU, said Auxiliary Power Unit is configured for providing standard APU functions which are to deliver electrical and pneumatic power for ground operations and flight operations. Also, the conditioning system is suitable to be installed in an aircraft.

The power unit comprises a fuel conduct configured to supply liquid fuel to a fuel conduct. The fuel conduct is feeding the power unit by means of a fuel inlet and is further connected to its other end at the power unit outlet.

The fuel provided to the fuel inlet is in a liquid phase and previously stored at specific temperature and pressure conditions. In preferred embodiments, the fuel is stored at a temperature in a range from 20K to 30K. At the fuel inlet, said fuel is injected at a temperature comprised in said temperature range.

The power unit also comprises evaporating means comprising a fuel inlet and a fuel outlet. The evaporating means are configured to supply heat to the fuel of the fuel conduct and to turn the fuel of the fuel conduct from liquid form into gas form. One of the main functions of the evaporating means is to condition the fuel entering said evaporating means from an inlet temperature to an outlet temperature where the outlet temperature is significantly higher than the inlet temperature while said fuel also transforms the fuel from liquid form or supercritical fluid form (SCF) into low temperature gas form.

In some embodiments, the evaporating means are able to provide consistent behaviour for high gradients of temperatures such as from cryogenic temperature, between 20K and 30K. In preferred embodiments, the fuel at the fuel inlet of the evaporating means is in supercritical fluid form (SCF) or into low temperature gas form and, at the fuel outlet of the evaporating means, the gas fuel is conditioned up to ambient temperature, preferably between 225K and 330K.

The power unit further comprises heating means connected to the evaporating means and configured to supply heat to the fuel of the fuel conduct. The heating means also comprise a fuel inlet and a fuel outlet.

When the aircraft is still on ground and the engine of the power unit is not running yet, the temperature of the fuel injected into the engine, and the power unit in general, is too low for the system to work safely and for the fuel to be provided to the engine in its operative conditions such as temperature, pressure and phase. In these conditions when the fuel temperature is low, i.e. a cold start, the engine consumes more fuel and more heat is required for the fuel to be provided in operative conditions. Therefore, the heating means are responsible for providing the energy and heat required so that the fuel of the fuel conduct reaches all of these operative conditions.

The heating means are to be considered as a support to the conditioning system of the invention which, in fully operative mode, is to be turned off and the conditioning system is providing the required energy/heat to the fuel of the fuel conduct by means of the evaporating means only. The heating means energy provided to the fuel conduct is decreasing at the same time the energy provided to the fuel conduct by the evaporating means is increasing. That is, the balance between the heating means and the evaporating means is considered as an active control of the conditioning system, more particularly of the fuel of the power unit.

Advantageously, heating the fuel by means of the heating means avoids the conditions of a cold start of the engine which is considered the worst start-up conditions for any embodiment of the power unit, such as Auxiliary Power Units or propellers. In particular, cold start of the engine is the worst start-up conditions for the power unit since more fuel is necessary for the engine to start and, at the same time, it is when more heat is required from the heating means.

In some embodiments, the heating means comprise dedicated external batteries which ensure providing energy to the heating means such that heat is provided to the fuel of the fuel conduct by means of the heating means while being independent from the generated power of the power unit. In addition, by having dedicated external batteries, the aircraft is considered autonomous.

The power unit also comprises an engine comprising an inlet connected to the fuel conduct and an outlet connected to the power unit outlet. The power unit outlet is configured to exhaust gases out of the engine.

In some embodiments, the engine of the invention is a gas turbine.

In some embodiments, the power unit outlet comprises a silencer or muffler.

The conditioning system of the present invention also comprises a heat recovery circuit. The heat recovery circuit comprises a heat exchanger, recovering heat from the exhaust gases of the power unit, which is in fluid communication with the evaporating means of the power unit. Also, the heat recovery circuit comprises a working fluid which is to be understood as the fluid being recirculated inside the heat recovery circuit. Also, the heat recovery circuit is to be considered as an independent and a closed circuit where the fuel and the working fluid never enter in direct contact or mingle.

The heat exchanger length ensures that the pressure drop is minimized. In some embodiment, the heat exchanger is a pillow plate heat exchanger, or PPHE.

Additionally, the heat exchanger has null or low performance rates in the start-up phase of the power unit but still requires to reach its operative conditions as quick as possible in order to optimize the heat recovery circuit performance and, therefore, the whole power unit performance.

The heat recovery circuit is configured to supply the working fluid heat from the exhaust gases of the power unit to the fuel of the fuel conduct by means of the evaporating means. That is, the fuel conduct of the evaporating means and the heat recovery circuit share common surfaces in order to transfer said heat recycled from the heat recovery circuit.

Advantageously, the evaporating means and the part of the heat recovery circuit having common surfaces have a compact shape which benefit the whole sizing of the conditioning system of the invention. In preferred embodiment, said part of the heat recovery circuit in contact with the fuel conduct in the evaporating means has a multiple S-bends shape.

The working fluid of the heat recovery circuit is constantly recycled and in motion, while the power unit of the conditioning system is either in operative conditions, i.e., while is running, or while the power unit of the conditioning system is not running in order to avoid that said working fluid freezes when entering in contact with the fuel conduct where the fuel is at a substantially lower temperature than the temperature of the working fluid at this specific location which is the first point of contact of the working fluid with the fuel conduct of the power unit, which is located near the fuel inlet of the evaporating means.

The heat exchanger of the heat recovery circuit is connected to the power unit outlet and is configured to transfer heat from the exhaust gases of the power unit outlet to the working fluid inside the heat recovery circuit. Advantageously, the heat exchanger covers the entire perpendicular cross-section of the power unit outlet in order to exploit the most heat from the exhaust gases generated the functioning of the power unit.

Also, even though the heat recovery circuit is configured for transferring heat from the working fluid to the fluid of the fluid conduct by means of the evaporating means, said heat recovery circuit, since it is a closed circuit, is physically uncoupled from the fuel conduct and, thus, uncoupled from the engine. Therefore, if either the fuel conduct of the power unit or the heat recovery circuit is/are damaged, there is no need to uncoupled one from the other in order to perform maintenance or repairing of either one of the elements of the power unit or either one of the elements of the heat recovery circuit. Furthermore, the heat recovery circuit is operable independently of the engine rotation and is also operable on request, before or after operating the engine of the power unit.

Advantageously, the heat recovery circuit is a heat support to the power unit and, more particularly, to the fuel conduct.

The heat exchanger is started-up as soon as the power unit is running in order to acquire heat from the exhaust gases of the power unit outlet at the earliest time, or before running the engine, so that the heat recovery circuit provides heat to the fuel of the fuel conduct by means of the working fluid and the evaporating means as soon as possible, thus, aiming in shutting off the heating means in the shortest time possible once the evaporating means are capable of independently provide heat to the fuel of the fuel conduct required for the engine of the power unit to reach operative conditions without support from the heating means. That is, when the fuel reaches a temperature between 225K and 330K.

In some embodiments, the fuel inlet and/or the inlet and outlet of the evaporating means and/or the inlet and outlet of the heating means and/or the inlet of the engine and/or the inlet and outlet of the heat exchanger comprise inerting means.

The inerting means is a system able to produce inert gas which is injected into encapsulated areas so that said area has enhanced security, for example, regarding eventual leakage of elements located in these encapsulated areas or even in the presence of fire in said encapsulated areas.

Advantageously, the conditioning system of the invention provides fuel to the engine of the power unit at the required temperature at any time of the power unit functioning, between 225K and 330K. Therefore, the conditioning system of the invention allows constant and precise control of the fuel conditions, such as pressure and temperature.

*In a particular embodiment, the heat recovery circuit further comprises:*
- *first pumping means,*
- *pressure regulation means configured for regulating pressure of the working fluid.*

The first pumping means allows to actuate over the circulation flow of the working fluid inside the heat recovery circuit and that said working fluid is in constantly flowing inside the heat recovery circuit.

In some embodiments, the first pumping means are located downstream the pressure regulation means. In some other embodiments, the first pumping means are located upstream the pressure regulation means.

In some embodiments, the pressure of the working fluid inside the heat recovery circuit is set at a value as high as the heat recovery system can manage in order to minimize the energy consumption of the first pumping means. The functioning and control of the first pumping means are independent from the engine functioning.

In some embodiments, the pressure of the working fluid is constant in a range 1.5 MPa to 6 MPa, preferably at 2.2 MPa.

In some embodiments, the first pumping means is mechanically connected to the engine of the power unit.

Advantageously, the first pumping means provides at least the minimum delta of pressure to the working fluid so that said working fluid is circulating inside the heat recovery circuit. In some embodiments, the minimum delta of pressure is higher or equal to 0.2 MPa and said delta is preferably as low as possible.

*In a particular embodiment, the pressure of the working fluid is higher than the pressure of the fluid of the fluid conduct.*

*In a particular embodiment, the heat recovery circuit (8) further comprises a first bypass conduct configured to connect a first portion of the heat recovery circuit and a second portion of the heat recovery circuit, wherein the first portion is located upstream the inlet of the heat exchanger and the second portion of the second conduct is located downstream the outlet of the heat exchanger.*

Advantageously, the first bypass actuates as a control and active system of the temperature of the working fluid right at the inlet and at the outlet of the heat exchanger.

In a particular embodiment, the heat recovery circuit further comprises a second bypass conduct configured to connect a third portion of the heat recovery circuit and a fourth portion of the heat recovery circuit, wherein the third portion is located between the evaporating means and the first portion of the heat recovery circuit, and wherein the fourth portion of the heat recovery circuit is located between the second portion of the heat recovery circuit and the evaporating means.

In a particular embodiment, the first bypass conduct comprises a first bypass valve, and the second bypass conduct comprises a second bypass valve.

*In a particular embodiment, the heat exchanger is configured for enclosing entire perpendicular cross-section of the power unit outlet.*

Enclosing the area of power unit outlet completely with the heat exchanger ensures exploiting the most heat transferred to the working fluid relatively to the heat produced by the power unit outlet.

*In a particular embodiment, the heating means are located downstream the evaporating means and upstream the engine.*

Advantageously, by placing the heating means downstream the evaporating means, the fuel provided at the inlet of the heating means is injected at a higher temperature than the fuel at the inlet of the evaporating means. Therefore avoiding possible damages of the heating means by requiring high heating performance and eventual damages of the fuel conduct due to low temperature of the fuel.

In a more particular embodiment, the conduct between the heating means and the engine is a flexible hose.

*In a particular embodiment, the heating means are located upstream the evaporating means and the engine is located downstream the evaporating means.*

In a more particular embodiment, the conduct between the evaporating means and the engine is a flexible hose.

Advantageously, thanks to this specific arrangement, the fuel is heated even when the conditioning system is cold, that is during start-up process, and thus prevent that the heat recovery circuit, in particular the working fluid, freezes.

*In a particular embodiment, the conditioning system further comprises second pumping means and a valve, wherein the second pumping means and the valve are configured to supply fuel to the power unit.*

The pumping means rises the pressure of the fuel, in liquid form, before entering the power unit. The valve provides to the system the ability to open or close the passage of the fuel to the power unit from the fuel inlet.

Preferably, the second pumping means are located upstream the valve and the valve is located upstream the fuel inlet of the power unit. Also preferably, both the second pumping means and the valve are mechanical.

*In a particular embodiment, the fuel conduct of the evaporating means and the heat recovery circuit are mounted in counterflow.*

Mounting the fuel conduct of the evaporating means an the heat recovery circuit in counterflow allows to supply the most heat provided but the working fluid of the heat recovery circuit at the inlet of the evaporating means which is where the fuel of the fuel conduct is colder. While the temperature of the working fluid is decreasing inside the heat recovery circuit since it transfers heat to the fuel of the fuel conduct increasing its temperature and facilitating the phase change of the fuel from liquid form into gas form.

The heat recovery circuit is maintained connected to the fuel conduct until the outlet of the evaporating means, where the temperature of the fuel of the fuel conduct is higher than its temperature at the inlet and its phase has changed; also the temperature of the working fluid is lower at the point of contact with the outlet of the evaporating means than it is when it is in contact with the inlet of the evaporating means.

Advantageously, the fuel conduct of the evaporating means and the heat recovery circuit are mounted in counterflow in order to provide optimized heat transfer between the working fluid and the fuel.

*In a particular embodiment, the evaporating means comprises a second heat exchanger and a third heat exchanger.*

In the whole document, the heat exchanger of the heat recovery circuit is to be considered the first heat exchanger.

In this particular embodiment, the second heat exchanger is located downstream the first heat exchanger which is the point where the working fluid is at its highest temperature. On the other end, the second heat exchanger is also located downstream the fuel inlet which is the point where the fuel is at its lowest temperature in the conditioning system of the invention. Thus, the second heat exchanger provides a temperature delta between the working fluid and the fuel which provides a change of the specific volume of the fuel at this specific location of the fuel conduct in order to start the phase change, that is, from liquid form or supercritical fluid form (SCF) into low temperature gas form.

In the same particular embodiment, the third heat exchanger is located downstream the second heat exchanger and provides another contact point between the heat recovery system and the fuel conduct so that the residual temperature delta between the working fluid and the fuel of the fuel conduct is able to provide overheating to the fuel after its phase change.

*In a particular embodiment, the heat recovery circuit comprises at least one temperature sensor and*/*or at least one pressure sensor.*

Controlling pressure along the heat recovery circuit ensures a correct monitoring of the pressure of the working fluid along the heat recovery circuit and, thus, optimizing the conditioning of the fuel of the fuel conduct ensuring the active control provided by the conditioning system of the invention.

*In a particular embodiment, the fluid of the fluid conduct is hydrogen (H2) and*/*or the working fluid of the heat recovery circuit is Nitrogen (N2), Helium (He), or a mixture of Nitrogen (N2) and Helium (He), and*/*or ethylene glycol water (EGW).*

In some embodiments, the fluid of the fluid conduct is pure hydrogen.

In some other embodiments, the fluid of the fluid conduct is a mixture of hydrogen and fuel such as methane, propane, butane etc. In the particular case of the fluid of the fluid conduct being a mixture, hydrogen is the majority of the mixture.

*In a particular embodiment, both the evaporating means and the heating means are encapsulated and*/*or wherein both the second pumping means and the valve are encapsulated.*

Advantageously, to encapsulate some particular elements of the conditioning system, such as the evaporating means and the heating means or the second pumping means and the valve, secures the rest of the conditioning system in case of leakage of fuel from the fuel conduct where these critical elements are located.

*In a second inventive aspect, the present invention provides an aircraft comprising a conditioning system according to the first inventive aspect of the invention.*

*In a third inventive aspect, the invention provides a method for conditioning fuel of conditioning system according to the first inventive aspect of the invention, when the aircraft is on ground or in flight, the method comprising the following steps:*
*a) actuating the heating means configured for supplying additional heat to the fuel of the fuel conduct until a fuel temperature reference value T_{FH},*
*b) running the power unit,*
*c) supplying heat from the heat recovery circuit to the evaporating means,*
*d) supplying heat from the evaporating means to the fuel conduct until a fuel temperature reference value T_{FL},*
e) *reducing the additional heat supplied by the heating means,*
*f) continuing supplying heat from the heat recovery circuit to the evaporating means until the fuel reaches the fuel temperature reference value T_{FH},*
*g) stopping the heating means when the fuel temperature reference value T_{FH} is reached.*

In preferred embodiments, the heating means are located downstream the evaporating means.

In some embodiments, the temperature reference value T_{FH} is lower or equal to the fuel temperature reference value T_{FL}.

In step a), the heating means are actuated for supplying additional heat to the fuel of the fuel conduct so that the temperature of the fuel reaches the temperature reference value T_{FH} in order to avoid damaging the fuel conduct and the engine of the conditioning system that are located downstream the heating means.

In some embodiments, the temperature reference value T_{FH} is between 225K and 330K, preferably around 288K.

In step c) and d), after running the power unit and the exhaust gases being generated by the engine of the APU, the heat recovery circuit is supplying heat to the fuel of the fuel conduct via the working fluid and the evaporating means. At this step of the method, the temperature of the fuel of the fuel conduct is raised until reaching the fuel temperature reference value T_{FL}.

In some embodiments, the fuel temperature reference value T_{FL} is 225K.

In step e) of the method of the first inventive aspect of the invention, both the heating means and the heat recovery circuit are providing heat to the fuel of the fuel conduct. In particular, at the outlet of the heating means, the fuel temperature reference value T_{FL} is constantly and precisely maintained at the fuel temperature reference value T_{FL}, preferably 288K, by the conditioning system of the invention.

Furthermore, also in step e), both the heat recovery circuit and the heating means are supplying heat to the fuel of the fuel conduct but, while the heat supplied by heat recovery circuit is increasing, the heat supplied by the heating means is decreasing correspondingly. In particular, when the temperature of the fuel of the fuel conduct at the outlet of the evaporating means is equal or higher than the fuel temperature reference value T_{FL} but still lower than the temperature reference value T_{FH}, the additional heat supplied by the heating means is decreasing. In particular embodiments, the heating means are actuated and the additional heat supplied to the fuel conduct is decreased when the temperature of the fuel of the fuel conduct at the outlet of the evaporating means is in the range 225K to 330K, preferably around 288K.

In step g) of the present method, the heating means are stopped once the heat recovery circuit is able to maintain, by itself, the temperature of the fuel of the fuel conduct at the temperature reference value T_{FH}. In particular embodiments, when the temperature reference value T_{FH} at the outlet of the evaporating means is 288K.

Advantageously, the method of the present invention provides a constant precise maintenance of the temperature required for the fuel of a conditioning system so that the engine is functioning in an optimal manner.

*In a particular embodiment of the third inventive aspect, the second pumping means are configured to supply fuel at a fuel pressure reference value P_{F} to the power unit, and the first pumping means and the pressure regulation means are configured to maintain the working fluid at a working fluid pressure reference value P_{WF}.*

In some embodiments, the fuel pressure reference value P_{F} is 1.25 MPa.

In some embodiments, the working fluid pressure reference value P_{WF} is constant in a range 1.5 MPa to 6 MPa, preferably at 2.2 MPa.
2.2 MPa.

Advantageously, the method of the present invention also provides a constant a precise maintenance of the pressure required for the fuel of a conditioning system so that the engine is functioning in an optimal manner.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows an embodiment of the conditioning system according to the present invention.
- Figure 2: This figure shows a graphic representing the power supplied by the heating means and the heating means power of a system without a recovery circuit such as the one of the present invention, all with respect to the shaft speed of an engine according to an embodiment of the invention.

### DETAILED DESCRIPTION OF THE INVENTION

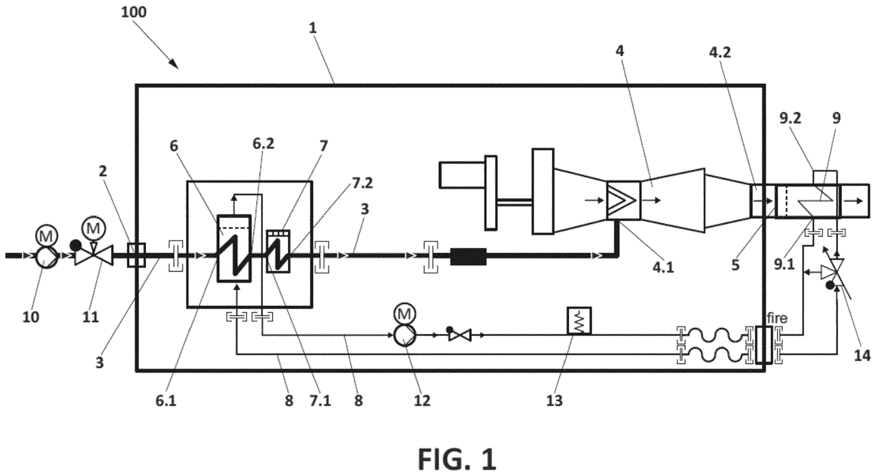

Figure 1 shows a schematic representation of a conditioning system (100) for an aircraft according to an embodiment of the invention.

In the embodiment of Figure 1, the conditioning system (100) comprises a power unit (1) which comprises a fuel inlet (2), a fuel conduct (3), an engine (4), a power unit outlet (5), evaporating means (6) and heating means (7). In some embodiments, the power unit (1) is an Auxiliary Power Unit or APU. In some other embodiments, the power unit (1) is a propeller.

In some embodiments, the fuel is hydrogen. In preferred embodiments, the hydrogen is stored at 20K, before being injected into the power unit (1), and the conditioning system (100) of the invention provides heat to the hydrogen such that the temperature of the hydrogen before entering the engine (4) is constant at 288K. Also in preferred embodiments, the fuel, preferably hydrogen, is injected in the conditioning system (100) at 1.25 MPa.

The fuel inlet (2) is configured to supply liquid fuel to the fuel conduct (3) and the fuel conduct (3) connect the fuel inlet (2) to the engine (4). The engine (4) comprises an inlet (4.1) and an outlet (4.2) connected to the power unit outlet (5). The power unit outlet (5) is configured to exhaust gases out of the engine (4). In particular embodiments, the engine (4) is a gas turbine.

Then, in the embodiment of Figure 1, the evaporating means (6) are connected to the fuel inlet (2) by the fuel conduct (3) and comprise a fuel inlet (6.1) and a fuel outlet (6.2). The evaporating means (6) are configured to supply heat to the fuel of the fuel conduct (3) and to turn the fuel of the fuel conduct (3) from liquid form into gas form. In some embodiments, the fuel injected into the evaporating means (6) is completely turned into gas form at the fuel outlet (6.2) of the evaporating means (6).

In some embodiments, not shown in Figure 1, the evaporating means (6) comprise a second heat exchanger and a third heat exchanger.

Also in Figure 1, the power unit (1) of the conditioning system (100) also comprise heating means (7) located downstream the evaporating means (6). The heating means (7) comprise a fuel inlet (7.1) connected to the fuel outlet (6.2) of the evaporating means (6) thanks to the fuel conduct (3) and the heating means (7) also comprise a fuel outlet (7.2). The heating means (7) are configured to supply heat to the fuel of the fuel conduct (3). In particular, the heating means (7) provides additional heat to the fuel of the fuel conduct (3). The heating means (7) are considered a support to the conditioning system (100) in such a way that, when the engine is not running yet, the heat provided to the fuel of the fuel conduct (3) comes from the heating means (7) and, later when the conditioning system (100) is in full operative mode, the heat transferred from the working fluid of the heat recovery circuit (8) to the fuel of the fuel conduct (3) is covering the total heat required for heating the fuel of the fuel conduct (3) in such a way that the heating means (7) provided heat decreases until the heating means (7) can be stopped.

In some other embodiments, the heating means (7) are located upstream the evaporating means (6).

In some embodiments, the heating means (7) are provided with dedicated battery so that the functioning of the heating means (7) is independent of the rest of elements of the conditioning system (100).

Also in some embodiments, the evaporating means (6) and the heating means (7) are encapsulated in order to avoid leakage outside the encapsulation of the evaporating means (6) and/or the heating means (7) which would damage the rest of the conditioning system (100).

Back to the embodiment of Figure 1, the fuel conduct (3) connects the fuel outlet (7.2) of the heating means (7) to the inlet (4.1) of the engine (4).

In some embodiments, the fuel conduct (3) between the heating means (7) and the engine (4) is a flexible hose.

The conditioning system (100) depicted in Figure 1 also comprises a heat recovery circuit (8). The heat recovery circuit (8) comprises a heat exchanger (9) in fluid communication with the evaporating means (6), and a working fluid. The working fluid is running along the whole heat recovery circuit (8) at a working fluid pressure reference value P_{WF}.

The heat exchanger (9) is connected to the power unit outlet (5) and comprises an inlet (9.1) and an outlet (9.2). The heat exchanger (9) is configured to transfer heat from the exhaust gases of the power unit outlet (5) to the working fluid located inside the heat recovery circuit (8). The heat exchanger (9) is also configured to supply the working fluid from the heat exchanger (9) to the evaporating means (6) and the evaporating means (6) are configured to supply the working fluid heat from the working fluid of the heat recovery circuit (8) to the fuel of the fuel conduct (3).

Preferably, the heat exchanger (9) is configured for covering the whole area of the power unit outlet (5) so that the maximum heat is generated from the exhaust gases of the engine (4) and transferred to the working fluid of the heat recovery circuit (8).

Also preferably, the working fluid of heat recovery circuit (8) is Nitrogen (N₂) or Helium (He), or a mixture of Nitrogen (N2) and Helium (He), and/or ethylene glycol water (EGW).

Also depicted in the embodiment of Figure 1, the heat recovery circuit (8) comprises first pumping means (12) located downstream the evaporating means (6) which actuates over the circulation flow of the working fluid inside the heat recovery circuit (8). The functioning and control of the first pumping means (12) are independent from the engine (4). In the same embodiment, the heat recovery circuit (8) shows pressure regulation means (13) located downstream the first pumping means (12) and configured for regulating pressure of the working fluid inside the heat recovery circuit (8). Also, the first pumping means (12) help providing the minimum delta of pressure necessary for the working fluid to flow inside the heat recovery circuit (8).

In some embodiments, the pressure of the working fluid is higher than the pressure of the fluid of the fluid conduct (3).

Also in the embodiment shown in Figure 1, the heat recovery circuit (8) comprises a first bypass conduct (14) configured to connect a first portion of the heat recovery circuit and a second portion of the heat recovery circuit. The first portion is located upstream the inlet (9.1) of the heat exchanger (9) and the second portion of the second conduct is located downstream the outlet (9.2) of the heat exchanger (9).

In preferred embodiments, the heat exchanger (9) is a pillow plate heat exchanger type. Pillow plate heat exchangers provide high performance in a more compact structure and lower weight than common heat exchangers while providing good structural stability.

In some other embodiments, the heat recovery circuit (8) comprises a second bypass conduct configured to connect a third portion of the heat recovery circuit (8) and a fourth portion of the heat recovery circuit (8). The third portion is located between the evaporating means (6) and the first portion of the heat recovery circuit (8), and the fourth portion of the heat recovery circuit (8) is located between the second portion of the heat recovery circuit (8) and the evaporating means (6).

In the embodiment of Figure 1, the conditioning system (100) further comprises second pumping means (10) and a valve (11), both configured to supply fuel to the power unit (1). In particular, the second pumping means (10) helps maintaining pressure of fuel injection inside the power unit (1) at the inlet (2). Also, the valve (11) allows opening and closing the conditioning system (100) in case of performing maintenance or in any event requiring closing the fuel entry in the power unit (1).

Also in the embodiment depicted in Figure 1, the second pumping means (10) and the valve (11) are encapsulated which avoid any leakage of fuel outside of the encapsulated area when both the second pumping means (10) and the valve (11) are considered critical elements with high risk of leakage.

In some embodiments, the fuel conduct (3) of the evaporating means (6) and the heat recovery circuit (8) are mounted in counterflow. By mounting the fuel conduct (3) and the heat recovery circuit (8) in counterflow, the conditioning system (100) improves the heat exchange between the fuel of the fuel conduct (2) and the working fluid of the heat recovery circuit (8) such that at the temperature of the working fluid is higher when in contact with the fuel outlet (6.2) of the evaporating means (6) and the temperature of the working fluid is lower in the portion of the heat recovery circuit (8) in contact with the fuel inlet (6.1) of the evaporating means (6). Advantageously, with counterflow, the delta of temperature for two corresponding points between the temperature of the working fluid and the temperature of the fuel inside the evaporating means (6) is positive which ensures optimal heat transfer from the working fluid to the fuel.

In some embodiments, not shown in Figure 1, the heat recovery circuit (8) comprises at least one temperature sensors and/or at least one pressure sensor. Preferably before and after supplying heat to the evaporating means (6) and also before and after the heat exchanger (9).

### Method for conditioning fuel

In the embodiment of Figure 1, the fuel is injected in liquid form through the inlet (2) of the power unit (1) at a fuel pressure reference value P_{F}, preferably at 1.25 MPa. The second pumping means (10) are configured to supply the fuel and maintain at all time during operation mode of the conditioning system (100) such that the fuel in the fuel conduct (3) is at the fuel pressure reference value P_{F}.

In parallel, once the power unit is running, the first pumping means (12) and the pressure regulation means (13) of the heat recovery circuit (8) are configured to maintain the working fluid at a pressure reference value P_{WF}, preferably at 2.2 MPa.

The conditioning system (100) of the invention, through the method previously described in the present document, is able to maintain, in a constant and precise manner, the temperature and pressure conditions of the fuel of the fuel conduct (3).

In that sense, since the heat recovery circuit (8) is not capable of generating heat from the exhaust gases right at the initiation of the power unit (1) of the conditioning system (100), because of the lack of exhaust gases at this stage, the heating means (7) are actuated in order to supply additional heat to the fuel of the fuel conduct (3) until the fuel reaches a fuel temperature reference value T_{FH}. In particular, the heating means (7) is thus responsible for supplying all the heat necessary to the fuel of the fuel conduct (3) until the fuel reaches the fuel temperature reference value T_{FH}, preferably 288K.

Gradually, the heat recovery circuit (8) is able to provide more and more heat thanks to the exhaust gases generated by the engine (4) and transferred said heat to the working fluid by means of the heat exchanger (9). At this stage, the heat provided by the working fluid to the fuel of the fuel conduct (3) is not enough to reach the fuel temperature reference value T_{FH}. That is, the heating means (7) provides the complement of thermal energy necessary to reach said fuel temperature reference value T_{FH}, preferably 288K, while the heat recovery circuit (8) is not fully operational yet.

Once the temperature at the outlet of the evaporating means (6) is higher or equal to a fuel temperature reference value T_{FL}, preferably 225K, the additional heat provided by the heating means (7) is progressively decreasing. In other words, the heat generated by the exhaust gases is increasing and the heat exchanger (9) is able to transfer more heat to the working fluid of the heat recovery circuit (8), consequently, said heat recovery circuit (8) is able to constantly provide more heat to the fuel of the fuel conduct.

Finally, when the temperature at the outlet of the evaporating means (6) is equal to the fuel temperature reference value T_{FH}, preferably 288K, the heating means (7) are stopped which result in the temperature of the fuel of the fuel conduct (3) being fully dependent of the heat provided by the heat recovery circuit (8) itself and, by extent, provided by the exhaust gases generated by the engine (4) of the power unit (1).

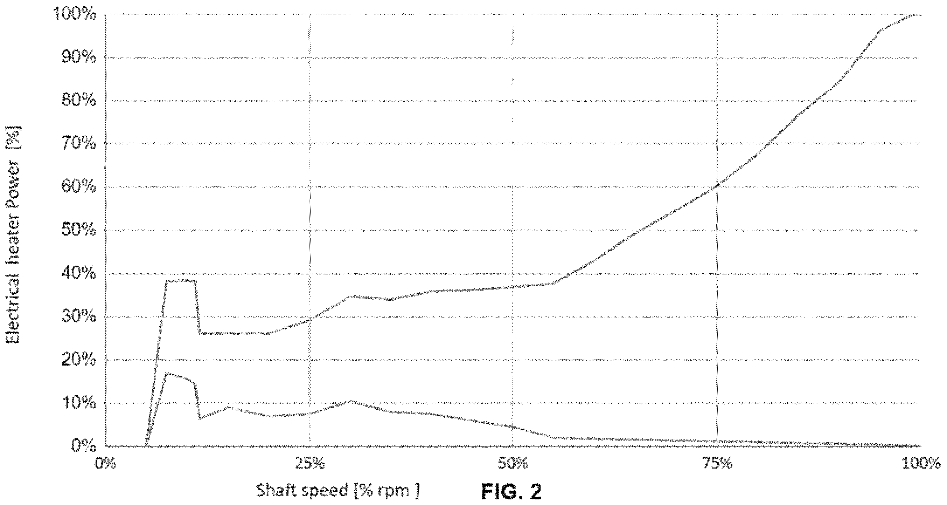

Figure 2 is a graphic depicting two lines. The first line, the one at the bottom, is representing the power provided by the heating means with respect to the engine shaft speed. The second line, the one at the top, is representing the required power for a shaft speed to be operative, preferably until running in optimal conditions.

As shown in Figure 2, close to 0%, which is considered the point of running a power unit, the heating means are capable of providing the totality, or close to the totality, of power needed by the engine so that the engine can start but when the engine is not generating enough exhaust gases in order to the heat recovery circuit to provide enough power. Once the required power from the engine has exceed the 50% of the shaft speed, the power required from the engine power unit increase notably. Between 0% and 50% of the engine shaft speed, the heating means are compensating and acting as support by providing additional power/heat which is needed for the fuel to be in its optimal conditions and be injected into the engine of the power unit.

In the particular case of the present invention, the delta between the first line and the second line, as shown in figure 2, is the power generated by the heat recovery circuit and produced by the evaporating means recuperated/recycled from the heat of the exhaust gases. Once the engine is producing enough exhaust gases, passed 50% of the shaft speed as shown in the graphic of Figure 2, the conditioning system of the invention enters in a phase where it is more dependent of the power provided by the heat recovery system and less dependent of the heating means. That is what represents Figure 2 between 50 to 100% of the shaft speed.

In particular, after reaching 50% of the engine shaft speed, the heating means power tends to 0. That is, when the heat recovery circuit of the conditioning system of the present invention is able to provide the totality of power needed by the engine to function without help of the heating means. Therefore, the heating means are stopped once the engine is reaching its optimal running conditions and the heat recovery system is responsible for generating enough heat and recycling enough heat from the exhaust gases so that the totality of power required for the engine shaft speed to be at 100%.

## Claims

1. A conditioning system (100) for an aircraft comprising a power unit (1) wherein the power unit (1) comprises:
- a fuel conduct (3),
- a fuel inlet (2) configured to supply liquid fuel to the fuel conduct (3),
- an engine (4) comprising an inlet (4.1) connected to the fuel conduct (3) and an outlet (4.2) connected to a power unit outlet (5), the power unit outlet (5) being configured to exhaust gases out of the engine (4),
- evaporating means (6) comprising a fuel inlet (6.1) and a fuel outlet (6.2) wherein the evaporating means (6) are configured to supply heat to the fuel of the fuel conduct (3) and turn the fuel of the fuel conduct (3) from liquid form or supercritical fluid form (SCF) into low temperature gas form at the fuel outlet (6.2),
- heating means (7) comprising a fuel inlet (7.1) and a fuel outlet (7.2), the heating means (7) being connected to the evaporating means (6) and wherein the heating means (7) are configured to supply heat to the fuel of the fuel conduct (3),
wherein the conditioning system (100) comprises a heat recovery circuit (8) comprising a heat exchanger (9), in fluid communication with the evaporating means (6), and a working fluid,
the heat exchanger (9) is connected to the power unit outlet (5), comprises an inlet (9.1) and an outlet (9.2), and is configured to transfer heat from the exhaust gases of the power unit outlet (5) to the working fluid,
the heat recovery circuit (8) being configured to supply heat from the heat exchanger (9) to the evaporating means (6) via/through the working fluid,
the evaporating means (6) are configured to supply heat from the working fluid of the heat recovery circuit (8) to the fuel of the fuel conduct (3), and
the heating means (7) are configured:
• to supply heat to the fuel of the fuel conduct (3) wherein said supplied heat by the heating means (7) decreases at the same time the heat supplied by the evaporating means (6) to the fuel of the fuel conduct (3) increases, actuating as an active control of the heat supplied to the fuel of the fuel conduct (3), and **characterised in that** the heating means are further configured
• to be turned off when the fuel reaches a temperature reference value T_{FH}.

2. The conditioning system (100) according to the preceding claim, wherein the heat recovery circuit (8) further comprises:
- first pumping means (12), and
- pressure regulation means (13) configured for regulating pressure of the working fluid.

3. The conditioning system (100) according to any of the preceding claims, wherein the pressure of the working fluid is higher than the pressure of the fuel of the fuel conduct (3).

4. The conditioning system (100) according to any of the preceding claims, wherein the heat recovery circuit (8) further comprises a first bypass conduct (14) configured to connect a first portion of the heat recovery circuit and a second portion of the heat recovery circuit, wherein the first portion is located upstream the inlet (9.1) of the heat exchanger (9) and the second portion of the second conduct is located downstream the outlet (9.2) of the heat exchanger (9).

5. The conditioning system (100) according to any of the previous claims, wherein the heat exchanger (9) is configured for enclosing the entire perpendicular cross-section of the power unit outlet (5).

6. The conditioning system (100) according to any of the preceding claims, wherein the heating means (7) are located downstream the evaporating means (6) and upstream the engine (4).

7. The conditioning system (100) according to any of claims 1 to 5, wherein the heating means (7) are located upstream the evaporating means (6) and the engine (4) is located downstream the evaporating means (6).

8. The conditioning system (100) according to any of claim 2 to 7, wherein the conditioning system (100) further comprises second pumping means (10) and a first valve (11), wherein the second pumping means (10) and the first valve (11) are configured to supply fuel to the power unit (1).

9. The conditioning system (100) according to any of the preceding claims, wherein the fuel conduct (3) of the evaporating means (6) and the heat recovery circuit (8) are mounted in counterflow.

10. The conditioning system (100) according to claim 1, wherein the evaporating means (6) comprises a second heat exchanger and a third heat exchanger.

11. The conditioning system (100) according to any of the preceding claims, wherein the heat recovery circuit (8) comprises at least one temperature sensor and/or at least one pressure sensor.

12. The conditioning system (100) according to any of the preceding claims, wherein the fluid of the fluid conduct (3) is hydrogen (H2) and/or the working fluid of the heat recovery circuit (8) is Nitrogen (N2), Helium (He), or a mixture of Nitrogen (N2) and Helium (He) and/or ethylene glycol water (EGW).

13. The conditioning system (100) according to any of the preceding claims, wherein both the evaporating means (6) and the heating means (7) are encapsulated and/or wherein both the first pumping means (12) and the first valve (11) are encapsulated.

14. Aircraft (200) comprising a conditioning system (100) according to any of the preceding claims.

15. Method for conditioning fuel of conditioning system (100) according to any one of claims 1 to 12, when the aircraft is on ground or in flight, the method comprising the following steps:
a) actuating the heating means (7) configured for supplying additional heat to the fuel of the fuel conduct (3) until a fuel temperature reference value T_{FH},
b) running the power unit (1),
c) supplying heat from the heat recovery circuit (8) to the evaporating means (6),
d) supplying heat from the evaporating means (6) to the fuel conduct (3) until a fuel temperature reference value T_{FL},
e) reducing the additional heat supplied by the heating means (7),
f) continuing supplying heat from the heat recovery circuit (8) to the evaporating means (6) until the fuel reaches the fuel temperature reference value T_{FH},
g) stopping the heating means (7) when the fuel temperature reference value T_{FH} is reached.

## Patentansprüche

1. Konditionierungssystem (100) für ein Luftfahrzeug, das eine Antriebseinheit (1) umfasst, wobei die Antriebseinheit (1) umfasst:
- eine Kraftstoffleitung (3),
- einen Kraftstoffeinlass (2), dazu ausgelegt, der Kraftstoffleitung (3) flüssigen Kraftstoff zuzuführen,
- einen Motor (4) umfassend einen Einlass (4.1), der mit der Kraftstoffleitung (3) verbunden ist, und einen Auslass (4.2), der mit einem Antriebseinheit-Auslass (5) verbunden ist, wobei der Antriebseinheit-Auslass (5) dazu ausgelegt ist, Gase aus dem Motor (4) abzuführen,
- eine Verdampfungseinrichtung (6) umfassend einen Kraftstoffeinlass (6.1) und einen Kraftstoffauslass (6.2), wobei die Verdampfungseinrichtung (6) dazu ausgelegt ist, dem Kraftstoff der Kraftstoffleitung (3) Wärme zuzuführen und den Kraftstoff der Kraftstoffleitung (3) aus flüssiger Form oder überkritischer Fluidform (SCF) in Niedertemperatur-Gasform an dem Kraftstoffauslass (6.2) umzuwandeln,
- eine Heizeinrichtung (7) umfassend einen Kraftstoffeinlass (7.1) und einen Kraftstoffauslass (7.2), wobei die Heizeinrichtung (7) mit der Verdampfungseinrichtung (6) verbunden ist und wobei die Heizeinrichtung (7) dazu ausgelegt ist, dem Kraftstoff der Kraftstoffleitung (3) Wärme zuzuführen,
wobei das Konditionierungssystem (100) einen Wärmerückgewinnungskreislauf (8) umfasst, der einen Wärmetauscher (9) in Fluidverbindung mit der Verdampfungseinrichtung (6) und ein Arbeitsfluid umfasst,
wobei der Wärmetauscher (9) mit dem Antriebseinheitsauslass (5) verbunden ist, einen Einlass (9.1) und einen Auslass (9.2) umfasst und dazu ausgelegt ist, Wärme von den Abgasen aus dem Antriebseinheit-Auslass (5) auf das Arbeitsfluid zu übertragen, und
wobei der Wärmerückgewinnungskreislauf (8) dazu ausgelegt ist, Wärme von dem Wärmetauscher (9) über/durch das Arbeitsfluid der Verdampfungseinrichtung (6) zuzuführen,
die Verdampfungseinrichtung (6) dazu ausgelegt ist, dem Kraftstoff der Kraftstoffleitung (3) Wärme von dem Arbeitsfluid des Wärmerückgewinnungskreislaufs (8) zuzuführen, und
die Heizeinrichtung (7) dazu ausgelegt ist:
• dem Kraftstoff der Kraftstoffleitung (3) Wärme zuzuführen, wobei die von der Heizeinrichtung (7) zugeführte Wärme abnimmt, wenn die von der Verdampfungseinrichtung (6) dem Kraftstoff der Kraftstoffleitung (3) zugeführte Wärme zunimmt, um als aktive Steuerung der dem Kraftstoff der Kraftstoffleitung (3) zugeführten Wärme zu wirken, und **dadurch gekennzeichnet, dass** die Heizeinrichtung ferner dazu ausgelegt ist,
• abgeschaltet zu werden, wenn der Kraftstoff einen Temperaturreferenzwert T_{FH} erreicht.

2. Konditionierungssystem (100) nach dem vorstehenden Anspruch, wobei der Wärmerückgewinnungskreislauf (8) ferner umfasst:
- eine erste Pumpeinrichtung (12), und
- eine Druckregeleinrichtung (13), ausgelegt zu Druckregelung des Arbeitsfluids.

3. Konditionierungssystem (100) nach einem der vorstehenden Ansprüche, wobei der Druck des Arbeitsfluids höher als der Druck des Kraftstoffs der Kraftstoffleitung (3) ist.

4. Konditionierungssystem (100) nach einem der vorstehenden Ansprüche, wobei der Wärmerückgewinnungskreislauf (8) ferner eine erste Umgehungsleitung (14) umfasst, dazu ausgelegt, einen ersten Abschnitt des Wärmerückgewinnungskreislaufs und einen zweiten Abschnitt des Wärmerückgewinnungskreislaufs zu verbinden, wobei der erste Abschnitt stromaufwärts des Einlasses (9.1) des Wärmetauschers (9) angeordnet ist und der zweite Abschnitt der zweiten Leitung stromabwärts des Auslasses (9.2) des Wärmetauschers (9) angeordnet ist.

5. Konditionierungssystem (100) nach einem der vorstehenden Ansprüche, wobei der erste Wärmetauscher (9) dazu ausgelegt ist, den gesamten senkrechten Querschnitt des Antriebseinheit-Auslasses (5) zu umschließen.

6. Konditionierungssystem (100) nach einem der vorstehenden Ansprüche, wobei die Heizeinrichtung (7) stromabwärts der Verdampfungseinrichtung (6) und stromaufwärts des Motors (4) angeordnet ist.

7. Konditionierungssystem (100) nach einem der Ansprüche 1 bis 5, wobei die Heizeinrichtung (7) stromaufwärts der Verdampfungseinrichtung (6) angeordnet ist und der Motor (4) stromabwärts der Verdampfungseinrichtung (6) angeordnet ist.

8. Konditionierungssystem (100) nach einem der Ansprüche 2 bis 7, wobei das Konditionierungssystem (100) ferner eine zweite Pumpeinrichtung (10) und ein erstes Ventil (11) umfasst, wobei die zweite Pumpeinrichtung (10) und das erste Ventil (11) dazu ausgelegt sind, der Antriebseinheit (1) Kraftstoff zuzuführen.

9. Konditionierungssystem (100) nach einem der vorstehenden Ansprüche, wobei die Kraftstoffleitung (3) der Verdampfungseinrichtung (6) und der Wärmerückgewinnungskreislauf (8) im Gegenstrom montiert sind.

10. Konditionierungssystem (100) nach Anspruch 1, wobei die Verdampfungseinrichtung (6) einen zweiten Wärmetauscher und einen dritten Wärmetauscher umfasst.

11. Konditionierungssystem (100) nach einem der vorstehenden Ansprüche, wobei der Wärmerückgewinnungskreislauf (8) wenigstens einen Temperatursensor und/oder wenigstens einen Drucksensor umfasst.

12. Konditionierungssystem (100) nach einem der vorstehenden Ansprüche, wobei das Fluid der Fluidleitung (3) Wasserstoff (H2) ist und/oder das Arbeitsfluid des Wärmerückgewinnungskreislaufs (8) Stickstoff (N2), Helium (He) oder ein Gemisch aus Stickstoff (N2) und Helium (He) und/oder Ethylenglycolwasser (EGW) ist.

13. Konditionierungssystem (100) nach einem der vorstehenden Ansprüche, wobei sowohl die Verdampfungseinrichtung (6) als auch die Heizeinrichtung (7) verkapselt sind und/oder wobei sowohl die erste Pumpeinrichtung (12) als auch das erste Ventil (11) verkapselt sind.

14. Luftfahrzeug (200) umfassend ein Konditionierungssystem (100) nach einem der vorstehenden Ansprüche.

15. Verfahren zum Konditionieren von Kraftstoff in einem Konditionierungssystem (100) nach einem der Ansprüche 1 bis 12, wenn sich das Luftfahrzeug am Boden oder im Flug befindet, wobei das Verfahren die folgenden Schritte umfasst:
c) Betätigen der Heizeinrichtung (7), die dazu ausgelegt ist, dem Kraftstoff der Kraftstoffleitung (3) zusätzliche Wärme zuführen, bis ein Kraftstofftemperatur-Referenzwert T_{FH} erreicht ist,
b) Betreiben der Antriebseinheit (1),
c) Zuführen von Wärme aus dem Wärmerückgewinnungskreislauf (8) zu der Verdampfungseinrichtung (6),
d) Zuführen von Wärme aus der Verdampfungseinrichtung (6) zu der Kraftstoffleitung (3) bis zu einem Kraftstofftemperatur-Referenzwert T_{FL},
e) Verringern der von der Heizeinrichtung (7) zugeführten zusätzlichen Wärme,
f) Fortsetzen des Zuführens von Wärme aus dem Wärmerückgewinnungskreislauf (8) zu der Verdampfungseinrichtung (6), bis der Kraftstoff den Kraftstofftemperatur-Referenzwert T_{FH} erreicht,
g) Anhalten der Heizeinrichtung (7), wenn der Kraftstofftemperatur-Referenzwert T_{FH} erreicht ist.

## Revendications

1. Système de conditionnement (100) pour un aéronef comprenant un groupe motopropulseur (1), le groupe motopropulseur (1) comprenant :
- une conduite de combustible (3),
- une entrée de combustible (2) configurée pour effectuer l'alimentation en combustible liquide à la conduite de combustible (3),
- un moteur (4) comprenant une entrée (4.1) reliée à la conduite de combustible (3) et une sortie (4.2) reliée à une sortie (5) de groupe motopropulseur, la sortie (5) de groupe motopropulseur étant configurée pour évacuer des gaz hors du moteur (4),
- des moyens d'évaporation (6) comprenant une entrée de combustible (6.1) et une sortie de combustible (6.2), dans lequel les moyens d'évaporation (6) sont configurés pour fournir de la chaleur au combustible de la conduite de combustible (3), et pour transformer le combustible de la conduite de combustible (3) d'une forme liquide ou d'une forme de fluide supercritique (SCF) en une forme de gaz ayant une basse température au niveau de la sortie de combustible (6.2),
- des moyens de chauffage (7) comprenant une entrée de combustible (7.1) et une sortie de combustible (7.2), les moyens de chauffage (7) étant reliés aux moyens d'évaporation (6) et dans lequel les moyens de chauffage (7) sont configurés pour fournir de la chaleur au combustible de la conduite de combustible (3),
dans lequel le système de conditionnement (100) comprend un circuit de récupération de chaleur (8) comprenant un échangeur de chaleur (9), en communication fluidique avec les moyens d'évaporation (6), et un fluide de travail,
l'échangeur de chaleur (9) est raccordé à la sortie (5) de groupe motopropulseur, comprend une entrée (9.1) et une sortie (9.2), et est configuré pour transférer de la chaleur depuis les gaz d'échappement de la sortie (5) de groupe motopropulseur au fluide de travail,
le circuit de récupération de chaleur (8) étant configuré pour fournir de la chaleur de l'échangeur de chaleur (9) aux moyens d'évaporation (6) via/par l'intermédiaire du fluide de travail,
les moyens d'évaporation (6) sont configurés pour fournir de la chaleur provenant du fluide de travail du circuit de récupération de chaleur (8) au combustible de la conduite de combustible (3), et
les moyens de chauffage (7) sont configurés :
• pour fournir de la chaleur au combustible de la conduite de combustible (3), dans lequel ladite chaleur fournie par les moyens de chauffage (7) diminue en même temps que la chaleur fournie par les moyens d'évaporation (6) au combustible de la conduite de combustible (3) augmente, agissant comme une commande active de la chaleur fournie au combustible de la conduite de combustible (3), et **caractérisé en ce que** les moyens de chauffage sont en outre configurés
• pour être éteints lorsque le combustible atteint une valeur de référence de température T_{FH}.

2. Système de conditionnement (100) selon la revendication précédente, dans lequel le circuit de récupération de chaleur (8) comprend en outre :
- des premiers moyens de pompage (12), et
- des moyens de régulation de pression (13) configurés pour réguler la pression du fluide de travail.

3. Système de conditionnement (100) selon l'une quelconque des revendications précédentes, dans lequel la pression du fluide de travail est supérieure à la pression du combustible de la conduite de combustible (3).

4. Système de conditionnement (100) selon l'une quelconque des revendications précédentes, dans lequel le circuit de récupération de chaleur (8) comprend en outre une première conduite de dérivation (14) configurée pour connecter une première partie du circuit de récupération de chaleur et une deuxième partie du circuit de récupération de chaleur, dans lequel la première partie est située en amont de l'entrée (9.1) de l'échangeur de chaleur (9) et la deuxième partie de la deuxième conduite est située en aval de la sortie (9,2) de l'échangeur de chaleur (9).

5. Système de conditionnement (100) selon l'une quelconque des revendications précédentes, l'échangeur de chaleur (9) étant configuré pour enfermer toute la section transversale perpendiculaire de la sortie (5) de groupe motopropulseur.

6. Système de conditionnement (100) selon l'une quelconque des revendications précédentes, dans lequel les moyens de chauffage (7) sont situés en aval des moyens d'évaporation (6) et en amont du moteur (4).

7. Système de conditionnement (100) selon l'une quelconque des revendications 1 à 5, dans lequel les moyens de chauffage (7) sont situés en amont des moyens d'évaporation (6) et le moteur (4) est situé en aval des moyens d'évaporation (6).

8. Système de conditionnement (100) selon l'une quelconque des revendications 2 à 7, dans lequel le système de conditionnement (100) comprend en outre des seconds moyens de pompage (10) et une première vanne (11), dans lequel les seconds moyens de pompage (10) et la première vanne (11) sont configurés pour fournir du combustible au groupe motopropulseur (1).

9. Système de conditionnement (100) selon l'une quelconque des revendications précédentes, dans lequel la conduite de combustible (3) des moyens d'évaporation (6) et le circuit de récupération de chaleur (8) sont montés à contre-courant.

10. Système de conditionnement (100) selon la revendication 1, dans lequel le moyen d'évaporation (6) comprend un deuxième échangeur de chaleur et un troisième échangeur de chaleur.

11. Système de conditionnement (100) selon l'une quelconque des revendications précédentes, dans lequel le circuit de récupération de chaleur (8) comprend au moins un capteur de température et/ou au moins un capteur de pression.

12. Système de conditionnement (100) selon l'une quelconque des revendications précédentes, dans lequel le fluide de la conduite de combustible (3) est de l'hydrogène (H2) et/ou le fluide de travail du circuit de récupération de chaleur (8) est de l'azote (N2), de l'hélium (He), ou un mélange d'azote (N2) et d'hélium (He) et/ou de l'éthylène glycoleau (EGW).

13. Système de conditionnement (100) selon l'une quelconque des revendications précédentes, dans lequel à la fois les moyens d'évaporation (6) et les moyens de chauffage (7) sont encapsulés et/ou dans lequel à la fois le premier moyen de pompage (12) et la première vanne (11) sont encapsulés.

14. Aéronef (200) comprenant un système de conditionnement (100) selon l'une quelconque des revendications précédentes.

15. Procédé de conditionnement de combustible d'un système de conditionnement (100) selon l'une quelconque des revendications 1 à 12, lorsque l'aéronef est au sol ou en vol, le procédé comprenant les étapes suivantes :
a) actionnement des moyens de chauffage (7) configurés pour fournir de la chaleur supplémentaire au combustible de la conduite de combustible (3) jusqu'à une valeur de référence de température de combustible T_{FH},
b) le fait de faire fonctionner le groupe motopropulseur (1),
c) fourniture de chaleur du circuit de récupération de chaleur (8) aux moyens d'évaporation (6),
d) fourniture de chaleur provenant des moyens d'évaporation (6) à la conduite de combustible (3) jusqu'à une valeur de référence de température de combustible T_{FL},
e) réduction de la chaleur supplémentaire fournie par les moyens de chauffage (7),
f) poursuite de la fourniture de chaleur depuis le circuit de récupération de chaleur (8) aux moyens d'évaporation (6) jusqu'à ce que le combustible atteigne la valeur de référence de température de combustible T_{FH},
g) arrêt des moyens de chauffage (7) lorsque la valeur de référence de température de combustible T_{FH} est atteinte.
